Europäisches Patentamt

European Patent Office

Office européen des brevets

(19)

(11) EP 0 681 684 B1

(12) EUROPEAN PATENT SPECIFICATION

(45) Date of publication and mention
of the grant of the patent:
**09.04.1997 Bulletin 1997/15**

(21) Application number: **94904725.2**

(22) Date of filing: **27.01.1994**

(51) Int Cl.⁶: **G01F 1/66**, G01P 5/00

(86) International application number:
**PCT/GB94/00156**

(87) International publication number:
**WO 94/17371 (04.08.1994 Gazette 1994/18)**

(54) **FLUID FLOW METER**

FLUESSIGKEITSSTROEMUNGSMESSER

DEBITMETRE POUR FLUIDES

(84) Designated Contracting States:
**DE ES FR GB IT NL**

(30) Priority: **30.01.1993 GB 9301873**
**02.08.1993 GB 9316001**

(43) Date of publication of application:
**15.11.1995 Bulletin 1995/46**

(73) Proprietor: **G. Kromschröder Aktiengesellschaft**
**D-49074 Osnabrück (DE)**

(72) Inventors:
• **COLLIER, James, Digby, Yarlet**
**Wilburton Cambridge CB6 3PZ (GB)**

• **DAVIS, Christopher**
**Fen Drayton Cambridge CB4 5SL (GB)**
• **FRYER, Christopher, James, Newton**
**Woburn Sands Buckinghamshire (GB)**
• **WAHA, Alain, Henri**
**Stansted Montfitchet CM24 8AU (GB)**

(74) Representative: **Skone James, Robert Edmund**
**GILL JENNINGS & EVERY**
**Broadgate House**
**7 Eldon Street**
**London EC2M 7LH (GB)**

(56) References cited:
**EP-A- 0 347 096**          **EP-A- 0 498 141**
**CH-A- 666 549**           **GB-A- 2 079 939**

## Description

This invention relates to a fluid flow meter of the kind comprising a first acoustic transducer upstream of a second acoustic transducer, the time of flight of acoustic waves between the transducers being used to measure the flow velocity of a fluid medium flowing between them.

An ultrasonic fluid movement device which uses this method is described in EP-A-0347096. This may be used to measure the flow velocity of gas through a passage of known dimensions. By multiplying the measured velocity by a velocity dependent co-efficient, the volume flow rate may be calculated. The device described may be used as part of a domestic gas meter.

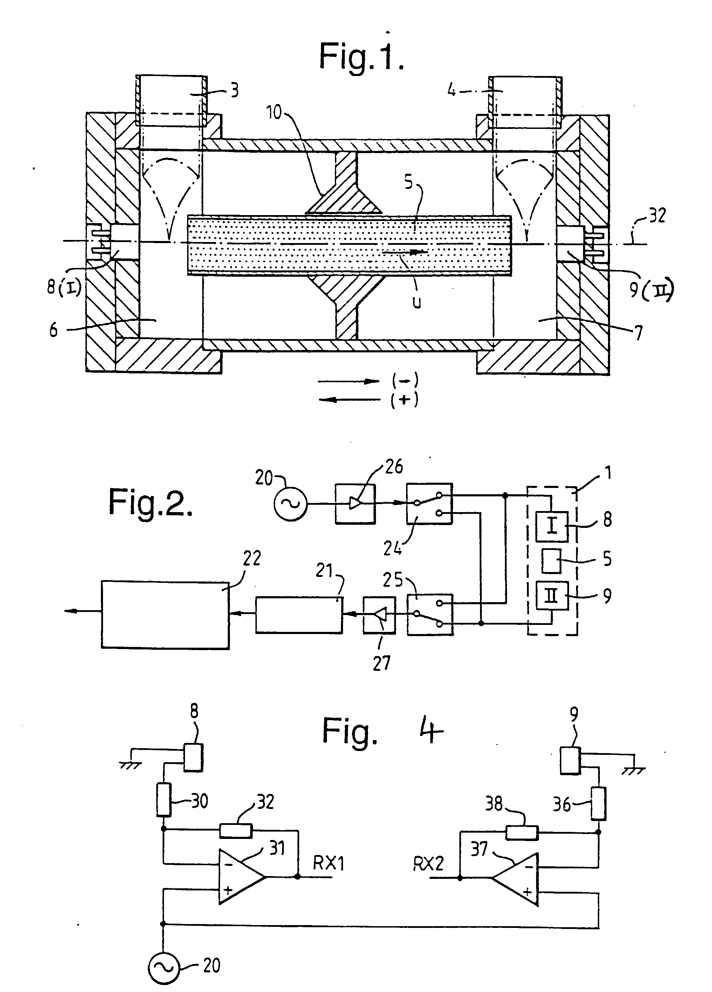

The velocity of a uniform fluid flow using the time of flight method can be measured in the following way. Neglecting interference effects in the flow, the time taken for a sound signal to travel from transducer I to transducer II (shown in Figure 1) is a function of the distance $\ell$ between the two transducers, the speed of sound c in the fluid medium, and the velocity U at which the fluid is moving uniformly.

More specifically, we can write for the time of flight $\Delta t$ in the downstream (-) direction, from I to II;

$$\Delta t^{-} = \frac{\ell}{c + U} \tag{1}$$

and for the time of flight $\Delta t^{+}$ in the upstream (+) direction, from II to I:

$$\Delta t^{+} = \frac{\ell}{c - U} \tag{2}$$

combining both relations, we get:

$$\frac{1}{\Delta t^{-}} - \frac{1}{\Delta t^{+}} = \frac{2U}{\ell} \tag{3}$$

which gives us a direct expression for the velocity of the fluid, independent of the speed of sound in the fluid:

$$U = \frac{\ell}{2} \left[ \frac{1}{\Delta t^{-}} - \frac{1}{\Delta t^{+}} \right]$$

$$\tag{4}$$

CH-A-666549 describes another example of a fluid flow meter operating on similar principles.

A further example is described in EP-A-0498141. In this latter example, each transducer is connected via a common switch to a processor for processing received signals and via respective operational amplifiers and resistors to a signal generator for transmitting signals. The specification indicates that the impedances connected between the amplifiers and the transducers should have the same real and imaginary parts as the transducer load. This achieves a minimal loss circuit.

None of the prior art flow meters have taken account, however, of the inherent phase shift and other electrical delays which occur in the electro-acoustic conversion of the emitted signal and acousto-electric conversion of the received signal through the transducers and the drive/receive circuits. With reference to equations (1) and (2) above, these electrical delays introduce a further factor which typically will be different depending upon the direction of transmission of the signals. The result of this is that equations (1) and (2) above are modified as follows:

$$\Delta t^{-} = \frac{1}{c + u} + t_{ell\text{-}II} \tag{5}$$

$$\Delta t^{+} = \frac{1}{c - u} + t_{elII\text{-}I} \tag{6}$$

where $t_{eIII-II}$ and $t_{eIII-I}$ are defined as the electrical delays introduced by the phase shift of the signal through the transducers in the I→II and II→I directions respectively.

In all the circuits described in the prior art documents above, these electrical delay terms will be different with the result that the value obtained for the velocity of the fluid will be inaccurate.

This is most evident in a no flow condition when U = 0. Under this condition, $\Delta t^-$ should be equal to $\Delta t^+$, leading to a measured zero flow rate. However, if $t_{eIII-I}$ is not equal to $t_{eII-II}$, a zero offset error will be observed.

GB-A-2079939 describes one approach to achieving reciprocal operation in which two ultrasonic transducer circuits are selectively operable as transmitter and receiver and the terminals of which are selectively connected by a switch-over circuit to a transmission signal generator and a receiver amplifier. In order to provide practically equal terminating impedances to the two terminal pair network, the transmission signal generator is in the form of a current generator. The drawback of this approach is that the circuit components need to be selected carefully to achieve reciprocal operation.

In accordance with the present invention, a fluid flow meter comprises a pair of transducers spaced apart in the direction of fluid flow; transmitting means connected by a first electrical circuit to the transducers for causing acoustic signals to be transmitted in both directions through the fluid by the transducers; and processing means connected to the transducers by a second electrical circuit for determining information relating to the fluid flow by monitoring the time of flight of acoustic signals received by the transducers, the electrical impedance presented to each transducer by the first and second electrical circuits being substantially the same and is characterised in that each transducer is connected in parallel via respective damping resistors to the inverting input of a respective operational amplifier and to a feedback resistor associated with the operational amplifier, the non-inverting inputs of the operational amplifiers are connected via a first switch to the transmitting means, and the outputs of the operational amplifiers are connected via a second switch to the processing means.

With this invention, complete "reciprocal operation" is achieved so that each transducer is presented with the same electrical impedance when it is transmitting or receiving.

In one example, this can be achieved by inserting a suitable matching impedance in the transmit or receive circuit in order to match the total impedance (including any switch impedance) of the two circuits, as seen by any one transducer. A 5ns reciprocity can be achieved on a 825 μs measurement by tuning the circuits to within 10Ω (resistive and reactive) of each other, when using two similar transducers having resonant frequencies within 1kHz of each other. Under these conditions, the phase shift due to the transducers' resonant behaviour is the same when receiving as when transmitting. This reciprocal behaviour means that the total transducer phase shift is the same upstream as it is downstream, ensuring that any variation in transducer phase response appears as a small gain error in the meter.

Typically, the non-inverting inputs of the operational amplifiers are connectable to ground when the respective output is connected to the processing means.

In the preferred example, the first switch has an input connected to the transmitting means and selectable outputs connected to the non-inverting inputs of each operational amplifier, and the second switch has an output connected to the processing means and selectable inputs connected to the outputs of the operational amplifiers. In this case, a third switch may be provided having an input connected to ground and selectable outputs connected to the non-inverting inputs of the operational amplifiers.

A fluid flow meter such as described above can be reduced to a small physical size (e.g. house brick size) and can be produced at low cost. A unit such as described is highly suitable for domestic gas metering.

Very low power consumption, which enables long term battery operation, is achieved through a high electro-acoustic conversion efficiency and simple data processing.

Some examples of fluid flow meters in accordance with the present invention will now be described with reference to the accompanying drawings, in which:-

Figure 1 is a cross-section through the flow meter;
Figure 2 is a block diagram of an electronic system for comparative purposes;
Figure 3 is a circuit diagram showing schematically one example of the transmit and receive circuitry; and
Figure 4 illustrates a modification of the Figure 3 example.

Fluid enters the flow meter at the inlet (3) shown in Figure 1 and exits at the outlet (4) after having travelled down a metering tube (5) linking inlet and outlet chambers (6) and (7).

The flow is probed in the flow sensor using two ultrasonic transducers (8) and (9) to emit and receive pulses of sound down the metering tube. The elapsed time from transmission to reception is timed in the upstream (+) and downstream (-) directions by the electronic system (Figure 2). From these measurements, the volume flow rate through the meter is determined as described above.

Inlet chamber (6) is a cylindrical cavity into which fluid incoming through inlet (3) is injected tangentially in order to produce a rotary fluid flow within the chamber (6) having no component of velocity in the axial direction of the metering tube (5). The purpose of doing this is to remove or reduce flow influences upstream of inlet (3) which could affect flow velocity in metering tube (5). Metering tube (5) is thus effectively decoupled from external disturbing influences in the incoming flow, and the fluid flow through the tube is rotationally symmetrical about a line 32 connecting centres of the transducers.

Figure 2 shows a more detailed diagram of a comparative example of the electronics system (2). The system consists of a signal generator (20) which drives transducer I (8) via an amplifier 26, for an upstream measurement, switching to drive transducer II (9) for a downstream measurement. Acoustic signals propagate through the metering tube (5) and are received by the other transducer. In the system described the received signals are digitised by an ADC (21) and fed to a digital signal processing unit (22) from which a flow rate signal is output. In the Figure switches (24,25) are arranged so that the first transducer (8) is transmitting, and the second transducer (9) is receiving.

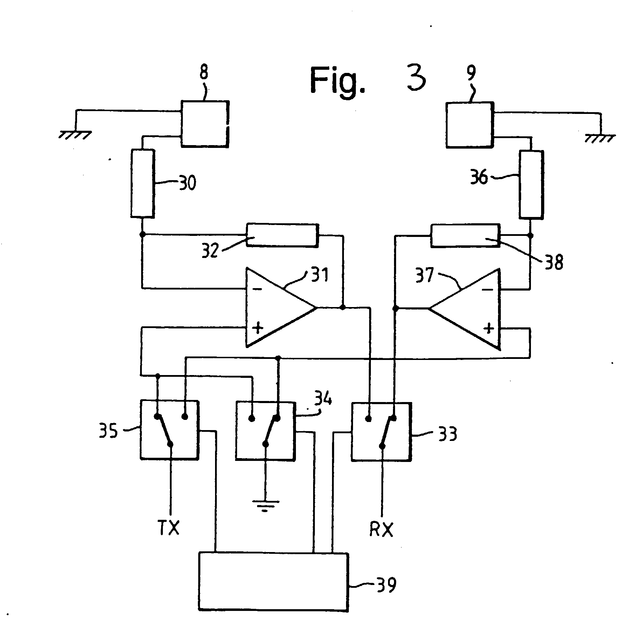

Figure 3 shows an example of a circuit according to the invention. In this circuit, the transducer 8 is connected via a damping resistor 30 to the inverting input of an operational amplifier 31. The output from the amplifier 31 is fed back through a feedback resistor 32 to the inverting input. The output is also fed to a switch 33 connected to the digital signal processing circuit 22 (not shown). The non-inverting input of the operational amplifier 31 is connected to a pair of switches 34,35 in parallel. The input to the switch 34 is connected to ground (or a virtual earth) and the input to the switch 35 is connected to the signal generator 20. In this case, switches 33,35 substitute for switches 25,24 in Figure 2.

The transducer 9 is connected in a similar manner via a damping resistor 36 to the inverting input of an operational amplifier 37. A feedback resistor 38 is connected between the output of the operational amplifier 37 and the inverting input of the operational amplifier while the output of the operational amplifier is fed to the switch 33. The non-inverting input of the amplifier 37 is connected in parallel to switches 34,35.

Although not shown in Figure 2, the switches 24,25 are connected to a controller which operates them in tandem. In a similar way, switches 33-35 are controlled from a control unit 39 to operate in tandem. Thus, as shown in Figure 3, the transducer 8 is connected via the switch 35 to the signal generator 20 while the transducer 9 is connected to the digital signal processing circuit 22 via the switch 33 with the non-inverting input to the operational amplifier 37 connected to ground by the switch 34. This circuit ensures that each transducer is presented with an identical impedance in transmit and receive modes.

Typically, the transducers 8,9 are piezo-electric ultrasonic transducers, resonant at 40kHz with a $Q \leq 50$, as available for example from Murata (MA40S3). The damping resistors 30,36 are typically each 4k$\Omega$. The Operational Amplifiers 31,37 typically have a gain much greater than 5 at 40kHz.

Figure 4 illustrates a modification of the Figure 3 example in which the switches 33-35 have been omitted. Like reference numerals in Figure 4 illustrate the same components as those in Figure 3. In this case, the signal generator 20 is directly connected to the non-inverting inputs of the amplifiers 31,37 while the outputs of the amplifiers 31,37 (RX1,RX2) are connected either to two processors (not shown) or to a single multiplexing unit. The signal generator 20 will generate a signal for a given period and would then be switched off to allow the circuit to receive. Typically, the drive signal will be on for a period equivalent to twice the average time of flight and will be off for about a duration corresponding to the average time of flight.

The advantage of the Figure 3 circuit is that the drive and processing means can be simplified without loss of reciprocal operation. Further, by placing switches on the transmit and receive sides of the operational amplifiers, the meter can be operated in both modes serially, use the same processing means, and can drive or listen by connecting either to ground or to the drive, instead of starting and stopping the drive circuit.

## Claims

1. A fluid flow meter comprising a pair of transducers (8,9) spaced apart in the direction of fluid flow; transmitting means (20) connected by a first electrical circuit to the transducers for causing acoustic signals to be transmitted in both directions through the fluid by the transducers; and processing means (22) connected to the transducers by a second electrical circuit for determining information relating to the fluid flow by monitoring the time of flight of acoustic signals received by the transducers the electrical impedance presented to each transducer by the first and second electrical circuits being substantially the same, characterised in that each transducer (8,9) is connected in parallel via respective damping resistors (30,36) to the inverting input of a respective operational amplifier (31,37) and to a feedback resistor (32,38) associated with the operational amplifier, the non-inverting inputs of the operational amplifiers are connected via a first switch (35) to the transmitting means, and the outputs of the operational amplifiers are connected via a second switch (33) to the processing means.

2. A meter according to claim 1, wherein the non-inverting inputs of the operational amplifiers are connectable to ground when the respective output is connected to the processing means.

3. A meter according to claim 1 or claim 2, wherein said first switch (35) has an input connected to the transmitting means and selectable outputs connected to the non-inverting inputs of each operational amplifier, and said second switch (33) has an output connected to the processing means and selectable inputs connected to the outputs of the operational amplifiers.

4. A meter according to claim 2 and claim 3, further comprising a third switch (34) having an input connected to ground and selectable outputs connected to the non-inverting inputs of the operational amplifiers.

5. A meter according to any of the preceding claims, wherein the resistance of the damping resistors (30,36) is substantially the same.

6. A fluid flow meter according to any of the preceding claims, wherein the fluid flow meter determines the volume flow rate in a gas meter.

7. A fluid flow meter according to any of claims 1 to 5, wherein the fluid flow meter determines the volume flow rate in a water meter.

**Patentansprüche**

1. Mediendurchflußmesser mit zwei Wandlern (8,9), die sich in einem Abstand voneinander in Strömungsrichtung des Mediums befinden; einer Sendeeinrichtung (20), die über einen ersten Stromkreis mit den Wandlern verbunden ist, damit Schallsignale von den Wandlern in beide Richtungen durch das Medium gesendet werden können; und einer Verarbeitungseinrichtung (22), die über einen zweiten Stromkreis mit den Wandlern verbunden ist, um durch Überwachung der Laufzeitdifferenz der von den Wandlern empfangenen Schallsignale Informationen über die Mediendurchflußmenge zu ermitteln, wobei die an dem jeweiligen Wandler anstehende elektrische Impedanz für den ersten und zweiten Stromkreis im wesentlichen gleich ist, dadurch gekennzeichnet, daß jeder Wandler (8,9) über entsprechende Dämpfungswiderstände (30,36) mit dem invertierenden Eingang eines entsprechenden Operationsverstärkers (31,37) parallelgeschaltet sowie an einen zum Operationsverstärker zugehörigen Rückkopplungswiderstand (32,38) angeschlossen ist, wobei die nicht invertierenden Eingänge der Operationsverstärker über einen ersten Schalter (35) mit der Sendeeinrichtung und die Ausgänge der Operationsverstärker über einen zweiten Schalter (33) mit der Verarbeitungseinrichtung verbunden sind.

2. Durchflußmesser nach Anspruch 1, dadurch gekennzeichnet, daß die nicht invertierenden Eingänge der Operationsverstärker mit der Erde verbunden werden können, wenn der entsprechende andere Ausgang an die Verarbeitungseinrichtung angeschlossen ist.

3. Durchflußmesser nach Anspruch 1 oder 2, dadurch gekennzeichnet, daß der erste Schalter (35) ein Eingang, der mit der Sendeeinrichtung verbunden ist, sowie wählbare Ausgänge aufweist, die an die nicht invertierenden Eingänge jedes Operationsverstärkers angeschlossen sind, und daß der zweite Schalter (33) ein Ausgang, der mit der Verarbeitungseinrichtung verbunden ist, sowie wählbare Eingänge aufweist, die an die Ausgänge der Operationsverstärker angeschlossen sind.

4. Durchflußmesser nach Anspruch 2 und 3, der ferner einen dritten Schalter (34) aufweist, bei dem ein Eingang mit der Erde verbunden ist und wählbare Ausgänge an die nicht invertierenden Eingänge der Operationsverstärker angeschlossen sind.

5. Durchflußmesser nach einem der vorangehenden Ansprüche, dadurch gekennzeichnet, daß der Widerstand der Dämpfungswiderstände (30,36) im wesentlichen gleich ist.

6. Mediendurchflußmesser nach einem der vorangehenden Ansprüche, dadurch gekennzeichnet, daß der Mediendurchflußmesser den Volumendurchfluß in einem Gaszähler ermittelt.

7. Mediendurchflußmesser nach einem der Ansprüche 1 bis 5, dadurch gekennzeichnet, daß der Mediendurchflußmesser den Volumendurchfluß in einem Wasserzähler ermittelt.

**Revendications**

1. Débitmètre fluidique comprenant un couple de transducteurs (8,9) espacés dans la direction d'écoulement du fluide; des moyens de transmission (20) connectés par un premier circuit électrique aux transducteurs pour provoquer l'émission de signaux acoustiques dans les deux directions à travers le fluide par les transducteurs; et des moyens de traitement (22) connectés aux transducteurs par un second circuit électrique pour déterminer une information concernant l'écoulement du fluide, par contrôle de la durée de déplacement de signaux acoustiques reçus par les transducteurs, l'impédance électrique présentée à chaque transducteur par les premier et second circuits électriques étant essentiellement identique, caractérisé en ce que chaque transducteur (8,9) est connecté en parallèle, par l'intermédiaire de résistances respectives d'atténuation (30,36), à l'entrée inverseuse d'un amplificateur opérationnel respectif (31,37) et à une résistance de réaction (32,38) associée à l'amplificateur opérationnel, les entrées non inverseuses des amplificateurs opérationnels étant connectées par l'intermédiaire d'un premier commutateur (35) aux moyens d'émission, et les signaux de sortie des amplificateurs opérationnels sont connectés par l'intermédiaire d'un second commutateur (33) aux moyens de traitement.

2. Appareil de mesure selon la revendication 1, dans lequel les entrées non inverseuses des amplificateurs opérationnels peuvent être connectées à la masse, lorsque la sortie respective est connectée aux moyens de traitement.

3. Appareil de mesure selon la revendication 1 ou 2, dans lequel ledit premier commutateur (35) possède une entrée connectée aux moyens d'émission et des sorties pouvant être sélectionnées, connectées aux entrées non inverseuses de chaque amplificateur opérationnel, et ledit second commutateur (33) possède une sortie connectée aux moyens de traitement et des entrées pouvant être sélectionnées, connectées aux sorties de l'amplificateur opérationnel.

4. Appareil de mesure selon les revendications 2 et 3, comprenant en outre un troisième commutateur (34) possédant une entrée connectée à la masse et des sorties pouvant être sélectionnées, connectées aux entrées non inverseuses des amplificateurs opérationnels.

5. Appareil de mesure selon l'une quelconque des revendications précédentes, dans lequel la valeur résistive des résistances d'atténuation (30,36) est essentiellement la même.

6. Débitmètre fluidique selon l'une quelconque des revendications précédentes, dans lequel le débitmètre fluidique détermine le débit volumique dans un compteur de gaz.

7. Débitmètre fluidique selon l'une quelconque des revendications 1 à 5, dans lequel le débitmètre fluidique détermine le débit volumique dans un compteur d'eau.

# Fig.1.

# Fig.2.

# Fig. 4

Fig. 3